# EUROPÄISCHE PATENTSCHRIFT

(11) **EP 2 938 900 B1**
(45) Veröffentlichungstag und Bekanntmachung des Hinweises auf die Patenterteilung: **18.09.2019**
(21) Anmeldenummer: 13823938.9
(22) Anmeldetag: 24.12.2013
(51) Int. Cl.: F16F 9/48, F16F 9/52, F03D 13/20, F03D 80/00, F03D 80/80

(54) **HYDRAULISCHER DÄMPFER UND DESSEN VERWENDUNG IN PENDELTILGERN FÜR WINDKRAFTANLAGEN**
HYDRAULIC DAMPER AND USE THEREOF IN PENDULUM ABSORBERS FOR WIND TURBINES
AMORTISSEUR HYDRAULIQUE ET SON UTILISATION DANS DES AMORTISSEURS PENDULAIRES POUR ÉOLIENNES

(30) Priorität: 28.12.2012 EP 12008648; 20.02.2013 EP 13000850
(43) Veröffentlichungstag der Anmeldung: 04.11.2015
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2013/003941
(87) Internationale Veröffentlichungsnummer: WO 2014/102016

(56) Entgegenhaltungen:
- EP-B1- 1 008 747
- BE-A- 520 847
- DE-A1- 1 817 391
- FR-A- 1 056 323
- US-A- 2 088 875
- US-A- 3 674 120

## Beschreibung

Die Erfindung betrifft einen neuen Dämpfertyp zur hydraulischen Dämpfung von Schwingungstilgern insbesondere Pendeltilgern. Der den erfindungsgemäßen Pendeltilgern zugrunde liegende hydraulische Dämpfer besitzt auf Grund seiner konstruktiven Merkmale entsprechend seiner axialen Beanspruchung in Abhängigkeit von der Auslenkung im Pendelbetrieb eine unterschiedliche wählbare Dämpfungscharakteristik im Vergleich zu herkömmlichen Dämpfern.

In einer besonderen Ausführungsform kann der erfindungsgemäße. Pendeltilger zusätzlich durch bestimmte konstruktive Vorrichtungen im Wesentlichen temperaturunabhängig gestaltet werden.

Die erfindungsgemäßen. Pendeltilger sind für ihren Einsatz insbesondere in Türmen von Windkraftanlagen geeignet, und hierbei insbesondere zur Dämpfung der 1. und 2. Eigenfrequenz.

Mit zunehmender Höhe von Windkraftanlagentürmen verstärkt sich das Problem von Turmschwingungen. Aufgrund der Transportproblematik sind die Durchmesser der Stahltürme begrenzt. Somit gibt es aufgrund der Schwingungsanfälligkeit der Türme eine Grenze für die Bauhöhe reiner Stahltürme. Eine Lösung des Problems ist der Einsatz von Hybridtürmen, d.h. man baut das unterste Turmstück aus Beton und setzt darauf einen Stahlturm. Somit erreicht man größere Turmhöhen. Dies bringt jedoch den Nachteil höherer Kosten.

Eine weitere Lösung ist der Einsatz höherer und damit weicher Stahlrohrtürme, die aufgrund der geringen Dämpfung mit zunehmender Höhe schwingungsempfindlicher werden und deshalb Schwingungstilger benötigen. Zum sicheren Betrieb von Anlagen mit Stahltürmen, welche eine Höhe von etwa 100 m überschreiten, sind Schwingungstilger mehr oder weniger zwingend erforderlich.

Dabei unterscheidet man zwischen Schwingungstilgern, welche zur Verringerung der ersten Biege-Eigenfrequenz des Turmes eingesetzt werden, und Schwingungstilgern, welche zur Verringerung der zweiten Biege-Eigenfrequenz des Turmes eingesetzt werden.

Die Schwingungstilger für die erste Turm-Eigenfrequenz werden im oberen Turmbereich angebracht. Diese dämpfen die Schwingungen der ersten Turm-Eigenfrequenz. Diese liegt im Bereich zwischen 0,1 Hz und 0.6 Hz, vorzugsweise zwischen 0,2 Hz und 0,4 Hz. Nach dem Stand der Technik werden Schwingungstilger verwendet, welche an einem Seil hängen und deren Masse in einem Ölbad bewegt wird. Durch die innere Reibung des Öles bei der Bewegung des Pendels im Ölbad wird eine Dämpfung erzeugt, welche Energie aus dem System heraus nimmt. Nachteil dieses Systems ist die erforderliche sehr große Ölmenge, um das Pendel in einem Ölbad bewegen zu können.

Die Tilger für die Dämpfung der zweiten Turm- Eigenfrequenz werden im mittleren Bereich des Turmes, in dem die größte Amplitude der Schwingbewegung besteht, angebracht. Die zweite Turm-Eigenfrequenz tritt in der Regel mit Frequenzen zwischen 1.0 und 3.0 Hz, vorzugsweise zwischen 1.2 und 2.0 Hz auf. In diesem Bereich muss der Tilger wirksam sein. Hier ist aufgrund der höheren Frequenz die alleinige Verwendung von Seilen nicht mehr möglich, da diese für die höhere Frequenz sehr kurz sein müssten, was technisch nicht möglich ist. Deshalb werden diese höheren Frequenzen nach dem Stand der Technik durch das Zuschalten von zusätzlichen Stahlfedern, deren Federwirkung in radialer oder auch senkrecht zur Schwing-Richtung erfolgt, realisiert. Alternativ werden auch Gummifedern eingesetzt. Da die Schwingungen des Turms auch im Stillstand der Anlage durch Wind angeregt werden, besteht die Notwendigkeit, die Tilger so zu bauen, dass diese auch im Stillstand der Anlage bei allen herrschenden Umgebungsbedingungen funktionieren müssen. Dies bedeutet auch, dass die Tilger bei Temperaturen zwischen -40° und +50° ohne die Verfügbarkeit elektrischer Energie sicher arbeiten müssen, da sonst die Gefahr besteht, dass die Anlagen durch Schwingungen zerstört werden.

Vielfach werden für Pendeltilger des Standes der Technik übliche hydraulische Dämpfer des Standes der Technik eingesetzt. Diese haben zumeist den Nachteil, dass sie temperaturabhängig sind, Die Temperaturabhängigkeit ist je nachdem welche Materialien oder hydraulische Flüssigkeiten verwendet werden stärker oder schwächer, jedoch nicht vermeidbar. Zudem besitzen die in besagten Dämpfern verwendeten Kolbendichtungen nur eine begrenzte Lebensdauer. Darüber hinaus neigen Pendeltilger, insbesondere in Windkraftanlagen, die mit üblichen hydraulischen Dämpfern ausgestattet sind, bei starken Zusatzbewegungen des Turms durch Betriebsschwingungen der Anlage zum Anschlagen des Pendels des an den Turm, so dass hier besondere Zusatzmaßnahmen erforderlich sind.

Pendeltilger für Türme von Windkraftanlagen sind beispielsweise aus der EP 1008747B1 bekannt. Hierbei handelt es sich um Tilger mit unterschiedlichen Dämpfungssystemen u.a. auch hydraulischer Art. Diese sind jedoch annähernd mit dem derzeitigen Stand der Technik vergleichbar.

Hydraulische Dämpfer, welche vorwiegend für den Einsatz in Fahrzeugen als Stoßdämpfer oder Bremszylinder entwickelt wurden, sind aus Schutzrechten mit den Aktenzeichen US 2,088,875 und der BE 520 847 bekannt.

Diese Dämpfer weisen Zylinder mit einem einen kegelstumpfförmigen Innenraum auf, in dem sich zusammen mit der hydraulischen Flüssigkeit ein Kolben aufgrund einer Krafteinwirkung so bewegen kann, dass er anfangs nur leicht bei stärkerer Kraftausübung jedoch stark und dann vollständig abgebremst wird.

Der hier beschriebene erfindungsgemäße Pendeltilger weist gegenüber dem Stand der Technik den Vorteil auf, dass die Dämpfung der jeweiligen Geschwindigkeit des Pendels angepasst ist und eine besonders starke Endlagendämpfung besitzt.

Um den speziellen oben genannten Anforderungen zur Dämpfung hoher Türme (> 100m), insbesondere von Windkraftanlagen gerecht zu werden, haben die Erfinder der vorliegenden Erfindung einen Dämpfer für einen Pendeltilger entwickelt, welcher eine Dämpfung aufweist, die entsprechend der unterschiedlichen Ausführungsformen die über den gesamten Auslenkungsbereich des Pendels konstant oder annähernd konstant oder aber in den Umkehrbereichen stärker ist als beim Nullpunktdurchgang des Pendels. Wahlweise kann die Dämpfung am größten im Bereich der größten Amplitude des Pendeltilgers sein und relativ geringer beim Durchgang des Pendels durch die Mittelstellung bei größter Geschwindigkeit.

In einer besonderen Ausführungsform vermag der erfindungsgemäße hydraulische Pendeltilger durch entsprechende konstruktive Maßnahmen die durch vorherrschende unterschiedliche Temperaturen bedingten unterschiedlichen Eigenschaften, insbesondere in Bezug auf die temperatursensitive Eigenschaften der hydraulischen Flüssigkeit, zu kompensieren.

Gegenstand der Erfindung ist somit ein Pendeltilger umfassend mindestens eine Pendelmasse (402, 411), welche an Pendelseilen, Pendelstangen (401) oder Pendelfedern befestigt ist, sowie mindestens zwei hydraulischen Dämpfern mit entlang des Kolbenweges einstellbaren Dämpfungseigenschaften, welche mit einem Ende an der Pendelmasse oder der Pendelkonstruktion, und mit dem anderen Ende am zu dämpfenden Bauwerk befestigt sind.

Dabei weist jeder dieser Dämpfer die Merkmale des Anspruchs 1 auf.

Ein Dämpfer des erfindungsgemäßen Pendeltilgers besteht im Wesentlichen aus einem Kolben (12, 308) welcher in einem Zylinder (22, 313, 502) bewegt werden kann. Der Kolben wird mit mindestens einer Stange (302) durch die Zylinderdeckel, die üblicherweise mit Gleitelementen ausgestattet sind, durch den Zylinderraum geführt.

Der Zylinder (22, 313, 502) hat die Besonderheit, dass er eine doppelte Konusform aufweist, was besagt, dass sein Durchmesser in der Mitte größer ist als an beiden Enden. Damit ist der Spalt (204) zwischen Kolben (12, 308) und Zylinder (22, 313, 502) im mittleren Bereich größer als an den Enden.

Die Dämpferkraft, welche durch die Reibung der zwischen Kolben (12, 308) und Hauptzylinder (22, 313, 502) vorbeiströmenden Flüssigkeit erzeugt wird, ist einerseits von der Dicke des Spaltes (204) zwischen Kolben und Zylinder abhängig, andrerseits auch von der Geschwindigkeit des Kolbens. Betrachtet man die Bewegung eines Pendels, so ist die Geschwindigkeit des Pendels in der mittleren, tiefsten Stellung des Pendels am größten, während sie mit größer werdenden Amplituden immer kleiner wird und am Endausschlag des Pendels Null wird. Im Gegensatz hierzu ist bei der Verwendung eines Hydrozylinders gemäß des Standes der Technik die Spaltbreite (204, 315, 315-1) zwischen Kolben und Zylinderinnenwand konstant, wodurch die Dämpfung bei der größten Pendelgeschwindigkeit (diese tritt bei einem Pendel in der Mittelstellung auf) am größten ist, während sie bei großen Ausschlägen in den Endbereichen kleiner wird. Somit ist die Dämpfung eines Pendels, der mit herkömmlichen Dämpfern ausgestattet ist, über den Pendelweg hinweg nicht konstant. Durch die konische Ausführung des Zylinders ist es nunmehr möglich die Dämpfung über den Schwingweg annähernd konstant zu halten. Weiterhin ist es möglich durch eine verstärkte Endlagendämpfung, beispielsweise durch vergrößerten Konuswinkel im Endbereich die Dämpfung bei besonders großen Amplituden des Pendels besonders stark zu dämpfen. Dies ist für den Einsatz von Pendeltilgern in Windkraftanlagen wichtig, da diese im Gegensatz zu rein windbelasteten Bauten wie z.B. Kaminen, für die bisherige Tilger entwickelt worden sind, auch betriebsbedingte stoßartige Bewegungen erzeugen, welche zur Folge haben, dass die Tilgermasse (402, 406) am Turm anschlägt. Um das zu vermeiden enthält die beschriebene Entwicklung eine Endlagendämpfung.

Gegenstand der Erfindung ist somit insbesondere auch ein Pendeltilger mit einem hydraulischen Dämpfer, der im mittleren Teil des Hauptzylinders (22, 313, 502) im Inneren einen zylindrischen Abschnitt hat, während er in den Endbereichen konusförmig geformt ist. Vorzugsweise weist ein solcher Dämpfer in beiden Endbereichen des Hauptzylinders (22, 313, 502) eine Konusform auf.

In einer besonderen Ausführungsform, welche insbesondere für Pendeltilger geeignet ist, die bei großen Ausschlägen / Amplituden stärker gedämpft sein sollen als beim Nullpunktdurchgang, weist der Dämpfer unterschiedliche Konuswinkel in einem oder beider, vorzugsweise beider Endbereiche des Hauptzylinders (22, 313, 502) auf.

Gegenstand der Erfindung ist somit ein Pendeltilger mit einem hydraulischen Dämpfer, bei dem der konusförmige Endbereich des Zylinders (22, 313, 502) einen unterschiedlichen Konuswinkel (201, 202) aufweist, wobei der Konuswinkel des nach außen weisenden Endabschnitts (202) des Zylinders größer ist als der des nach innen weisenden Endabschnitts (201). Erfindungsgemäß können die Unterschiede zwischen 0.1 und 45°, insbesondere 0.3 und 30°, vorzugsweise 0.5 und 10°, und besonders bevorzugt zwischen 0.1 und 1.0° betragen, jeweils gemessen zu Längsachse des Zylinders. In einem typischen Dämpfer ist der Mittelteil des Hauptzylinders zylindrisch, während beide Endbereiche konusförmig gestaltet sind mit einem Konuswinkel von 5°, 10°, 15°, 20°, 25° oder 30° gegenüber der Zylinderachse, wobei vorzugsweise die beiden Endbereiche gleich große Konuswinkel besitzen. In einem weiteren typischen Dämpfer ist der Mittelteil zylindrisch und beide Endbereiche weisen zwei jeweils unterschiedliche konusförmige Bereiche auf mit unterschiedlichen Konuswinkeln. Beispielsweise kann hier der Winkel des inneren Konus 5°, 10° oder 15° aufweisen, während der Winkel des äußeren Konus entsprechend größere ist, also beispielsweise 10°, 15° oder 20°. Anders ausgedrückt, der Zylinder besitzt von innen nach außen einen abnehmenden Durchmesser, wobei die Durchmesser auf einer gedachten Geraden liegen (Konusform), welche nicht parallel zur Längsachse des Zylinders angeordnet ist.

Die Konusform des Hauptzylinders (22, 313, 502) bedingt zwangsläufig eine von der Zylinderform abweichende Form des Kolbens (12, 308), damit der Kolben durch die gesamte Länge des Zylinders bewegbar ist, wobei entsprechend der erfindungsgemäßen Idee der Spalt (204, 315) zwischen dem Kolben und der Zylinderinnenwand ausreichend groß aber unterschiedlich entlang der Bewegungslänge sein muss, damit die Dämpfung in den Außenbereichen nicht kleiner, sondern gegebenenfalls gleich oder sogar größer als im mittleren Bereich des Hauptzylinders ist. Aus diesem Grund ist der Kolben (12, 308) ebenfalls konusförmig oder kegelförmig.

Gegenstand der Erfindung ist somit auch ein entsprechender Pendeltilger mit einem hydraulischen Dämpfer, bei dem der Konuswinkel (203) des Kolbens (12) gleich oder größer, dem größten Konuswinkel (201, 202) des Endbereiches des Hauptzylinders (22) ist, wobei der Konuswinkel gemessen wird zwischen der Längsachse des Dämpfers und der jeweiligen Konusfläche.

Wie bereits oben erwähnt, ist für den Einsatz in Windkraftanlagen eine besondere Endlagendämpfung erforderlich. Dazu ist der Durchmesser des Hauptzylinders im Endbereich des Kolbenweges kleiner gewählt (durch Konusform mit bestimmten Konuswinkel), so dass beim Eintauchen des Kolbens in diesen Bereich höhere Drücke entstehen. Der Durchmesser des Zylinders kann im Endbereich des Kolbenweges auf kleinem Niveau konstant bleiben. Zum besonders starken Abbremsen des Kolbens kann der Durchmesser des Zylinders sich im Endbereich nochmals deutlich reduzieren (durch Konusform mit vergrößertem Konuswinkel). Damit entsteht vor dem Erreichen der Endposition des Kolbens ein sich stark verjüngender Druck -Spalt zwischen Kolben und Zylinder, der zu einer hohen Bremskraft und damit Dämpfung führt.

Erfindungsgemäß weist der hydraulische Dämpfer des Pendeltilgers neben dem Hauptzylinder noch andere Bereiche auf.
So kann in einer weiteren Ausführungsform der Hauptzylinder (22, 313, 502) von einem Mantelrohr (314) umschlossen sein, und zwischen Mantelrohr und Zylinder (22, 313, 502) ein Raum (10) vorhanden sein, welcher drucklos mit hydraulischer Flüssigkeit gefüllt ist. Gegenstand der Erfindung ist somit ein entsprechender hydraulischer Dämpfer bei dem ein Mantelrohr (314) den Hauptzylinder (22, 313, 502) umschließt
Weiterhin weist der Dämpfer oberhalb des Hauptzylinders einen Vorzylinder (304) und unterhalb davon einen Nachzylinder (311) auf, durch welche die mindestens eine Kolbenstange (302) geführt wird oder hineinreicht, und welche auch als Flüssigkeitsausgleichräume dienen können.

Der Dämpfer des erfindungsgemäßen Pendeltilgers besteht aus dem Arbeitsbereich, in dem sich der Kolben bewegt (Hauptzylinder 22, 313, 502) und in dem sich somit höhere Drücke ergeben, und aus Bereichen (z. B. Vor- und Nachzylinder 304, 311) die annähernd drucklos sind. Da in dem Hauptzylinder gleichermaßen gedrückt und gesaugt wird, wird der Druckbereich relativ klein (maximal ein bar) gehalten. Bei großen, aufgrund von z.B. heftig auftretenden Windböen in Windkraftanlagen entstehenden, Stoßkräften sind auch höhere Drücke im Bereich von maximal 10 bar oder sehr selten noch höher, bis 20 bar, möglich. Den erforderlichen anagreifenden Kräften kann durch Anpassen des Durchmessers und der Anzahl der erfindungsgemäßen Dämpfer Rechnung getragen werden.

In einer bevorzugten Ausführungsform wird, wie erwähnt, der Hauptzylinder wird durch ein Mantelrohr (314) umschlossen. Der Bereich zwischen Zylinder und Außenrohr (314) ist vorzugsweise drucklos mit Flüssigkeit gefüllt. Somit kann die durch Leck Verluste zwischen den Zylinderbauteilen dem Zylinder austretende Flüssigkeit aufgefangen werden. Somit kann der Druckzylinder zur einfacheren Fertigung der konischen Elemente aus mehreren Einzelrohren einfach ohne Verwendung von Dichtungen hergestellt werden. Das Leck-Öl, welches an den Gleitführungen der Kolbenstangen (302) ggf. austritt, wird ebenfalls durch entsprechende Führungen und Bohrungen in den drucklosen Bereich geleitet. Die Öffnung des Flüssigkeitsraumes ist im eingebauten Bauzustand so nach oben geführt, dass keine Flüssigkeit austreten kann. Gegen das Eindringen von Staub ist zwischen dem Flüssigkeitsbehälter(n) und der Kolbenstange vorzugsweise eine gleitende Abdichtung vorgesehen. Um die Dichtung von ein- und ausströmender Luft zu entlasten, kann für große Amplituden und bei hoher Kolbengeschwindigkeit ein zusätzlicher Entlüftungsschlauch welcher nach oben geführt wird, zur Be-und Entlüftung vorgesehen werden. Alternativ verbindet dieser Entlüftungsschlauch alle (z.B. drei) Zylinder (Haupt-, Vor- und Nachzylinder) des gesamten Dämpfersystems, so dass sich der Druck ausgleichen kann und es nicht zu Druckschwankungen in den Einzelbereichen kommen kann.

Bei den beschriebenen Ausführungsformen fließt die vom Kolben (12, 308) verdrängte Flüssigkeit über Überström- oder Rückstromvorrichtungen wieder zurück hinter den Kolben. In einer einfachen Ausführungsform der Erfindung besteht diese Vorrichtung aus einer hohlen, ggf. löchrigen Kolbenstange, durch welche die Flüssigkeit vor dem Kolben bei Erreichen eines bestimmten Druckes wieder zurück hinter den Kolben ggf. unter Verwendung der vorhandenen Flüssigkeitsausgleichsräume führt. Das verdrängte Volumen wird hierbei über die Wandstärke der Kolbenstange definiert. Wird eine dünne Wandstärke der Kolbenstange realisiert, so fällt das verdrängte Volumen, bei Kolbenbewegung, klein aus. Somit kann dieses geringe verdrängte Volumen von der Kolbenstange durch Bohrung im inneren der selbigen aufgenommen werden, da sich lediglich der Füllstand in der Kolbenstange erhöht (bei einem Verfahren nach unten) bzw. absenkt (bei einem Verfahren des Kolbens nach oben). Wird eine dicke Wandstärke der Kolbenstange verwendet (aus Festigkeitsgründen), so muss viel Flüssigkeit verdrängt werden. Dies kann dazu führen, dass das innere Volumen der Kolbenstange nicht ausreicht um das verdrängte Volumen aufnehmen zu können. In diesem Fall muss ein separates Ausgleichsgefäß (304, 311) eingefügt werden, in welches die verdrängte Flüssigkeit hinein fließen kann. Dieses separate Ausgleichsgefäß kann sich außerhalb oder innerhalb vom Dämpfer befinden. Es muss lediglich eine direkte Verbindung zwischen diesem und dem Ausgleichgefäß bestehen. Um die von der Kolbenstange im Bereich (311) verdrängte Flüssigkeit in den Behälter für das Ausgleichsvolumen (304) zu bringen, wird in einer weiteren Ausführungsform der Bereich (311) mit (304) durch das Überströmrohr (312) verbunden.

Gegenstand der Erfindung ist somit ein entsprechender Pendeltilger mit einem hydraulischen hydraulischer Dämpfer, der die folgenden Überströmvorrichtungen- und/oder Rückstromvorrichtungen umfasst:
(i) Verbindungsrohre (312), welche die Flüssigkeitsausgleichsräume (304, 311) im Vor- und Nachzylinderbereich des Hauptzylinders (22, 313, 502), durch welche die mindestens eine Kolbenstange (302) geführt ist, miteinander verbinden, und welche ggf. zwischen Mantelrohr und Hauptzylinderrohr verlaufen, und / oder
(ii) einen Verdrängungsraum (10) zwischen Mantelrohr und Hauptzylinder (22, 313, 502), welcher mit dem Inneren des Hauptzylinders über Verbindungsstücke (52, 53, 58) in Verbindung steht,
wobei besagte Verbindungsrohre oder besagter Verdrängungsraum zur Überströmung oder Rückströmung und ggf. als Ausgleichsreservoir der verdrängten hydraulischen Flüssigkeit vorgesehen ist.

In einer Ausführungsform werden die Überströmvorrichtungen von dem besagten Verdrängungsraum (10) gebildet, der über die besagten Verbindungsstücke (52, 53, 58) im Bereich der beiden Endabschnitte des Zylinders (22, 313, 502) mit dem Inneren des Hauptzylinders in Verbindung steht.

Die Erfindung betrifft neben der oben beschriebenen, durch die besondere Konstruktion bedingten Dämpfungsregulierung bzw. der besonderen Dämpfungscharakteristik auch solche hydraulische Dämpfer, welche zusätzlich mit einer speziellen erfindungsgemäßen Temperaturkompensation ausgerüstet sind.

Die Zähigkeit oder Viskosität nahezu aller Flüssigkeiten, welche für die Verwendung eines solchen Systems infrage kommen, ist üblicherweise temperaturabhängig. Besonders bei tiefen Temperaturen nimmt die Viskosität sehr stark zu, so dass die Reibung und damit die Dämpfung eines oben beschriebenen Systems stark erhöht wird, was in der Regel Problem mit sich bringt. Um trotz dieser Temperaturabhängigkeit mit einer Flüssigkeit für alle Temperaturbedingungen auskommen zu können, weist der erfindungsgemäße Dämpfer ein oder mehrere Ausdehnungselemente auf, welche temperaturbedingte Effekte kompensieren. Die Erfindung bezieht sich somit auf einen Pendeltilger mit einem hydraulischen Dämpfer, der eine Vorrichtung umfasst zur Kompensation der durch Temperatur bedingten Veränderung der Viskosität der hydraulischen Flüssigkeit und damit der Dämpfung, wobei vorzugsweise besagte temperaturkompensierende Vorrichtung mindestens ein Ausdehnungselement aufweist, welches aus einem Material gefertigt oder beschichtet ist, das einen größeren Temperaturausdehnungskoeffizienten besitzt als das Material derjenigen restlichen Teile des Dämpfers (in der Regel aus Stahl oder Metall), die von der unter Druck befindlichen Flüssigkeit im Hauptzylinder (22, 313, 502) umgeben sind oder mit dieser in Kontakt stehen.
In einer ersten Ausführungsform wird das temperatursensitive Ausdehnungselement im Wesentlichen von einer temperaturabhängig gesteuerten Stellmechanik (3, 4) gebildet, die in funktioneller Verbindung mit einer Bypass-Öffnung (24) steht. Die Größe des Durchflussspaltes (24) im Hauptzylinder (22, 313, 502), bzw. die durch die Bypass-Öffnung fließende Flüssigkeitsmenge wird durch die veränderbare Position einer Stellmechanik (3, 4) bestimmt. Die Position der Stellmechanik (3, 4), die beispielsweise ein Stellglied oder ein Stellkolben und eine Stellbuchse bzw. ein Stellbolzen umfasst, wird temperaturabhängig wie folgt verändert: Im Bereich des Hauptzylinders, beispielsweise im Nachzylinderbereich (311) ist eine Stellbuchse oder ein Stellbolzen (3) angeordnet. Diese(r) besteht aus einem Werkstoff, welcher einen deutlich höheren bzw. größeren Temperaturausdehnungskoeffizient hat als der umgebende Werkstoff, der vorzugsweise aus Stahl ist. Somit wird die Länge der Stellbuchse bzw. des Stellbolzens (3) bei tiefen Temperaturen stärker verringert und bei höheren Temperaturen stärker verlängert als dies bei dem umgebenden Werkstoff der Fall ist. Die Stellbuchse oder der Stellbolzen (3) bewegt durch die veränderte Längenausdehnung wiederum den Stellkolben oder das Stellglied (4) so dass dadurch der Durchflussspalt / By-Pass-Öffnung (24) vergrößert oder verkleinert wird, wodurch wiederum der Flüssigkeitsfluss zwischen den beiden Überströmkanälen (52 und 53), die mit dem Inneren des Hauptzylinders in Verbindung stehen, nunmehr temperaturabhängig geregelt wird. Dieses Ausdehnungselement umfasst also eine Stellmechanik (3, 4) vorzugsweise in Form eines Stellbolzens oder eine Stellbuchse (3), und eines Stellglieds oder Stellkolbens (4), sowie einen mit Überströmkanälen oder - bohrungen (52, 58) in Verbindung stehenden Durchflussspalt (24), wobei mindestens Teile der Stellmechanik (3, 4) aus einem Material mit höherem Temperaturausdehnungs-koeffizienten als das Material des Material des Hauptzylinders (22) gefertigt sind, und die Stellmechanik (3, 4) durch die unterschiedliche temperaturabhängige Längenausdehnung die Breite des Durchflussspaltes (24) und damit bei bewegten Kolben (12, 308) den Flüssigkeitsdurchfluss im Hauptzylinder (22, 313, 503) reguliert. Die Stellmechanik kann auch eine Rückholeinrichtung (23) des Teiles der Einrichtung umfassen, welches die Öffnung des Durchflussspaltes (24) reguliert. Gegenstand der Erfindung ist somit eine entsprechender hydraulischer Dämpfer, bei dem das Stellglied oder der Stellkolben (4) lose mit der der Längenausdehnung unterworfenen Stellbuchse oder dem Stellbolzen (3) verbunden ist und durch eine am Hauptzylinderboden (22, 313, 503) befestigte Rückholvorrichtung (23), beispielsweise eine Feder, wieder in die Ausgangsposition gebracht werden kann. Das Rückholen des bei hohen Temperaturen eingefahrenen Stellkolbens (4) geschieht vorzugsweise durch die Rückholvorrichtung (23), so dass der Stellkolben oder das Stellglied (4) der bei geringeren Temperaturen kürzeren Stellbuchse bzw. dem Stellbolzen (3) folgt. Alternativ zu der Rückholvorrichtung kann der Stellkolben fest mit der am unteren Zylinderboden ebenfalls befestigten Stellbuchse (3) verbunden sein, so dass der Stellkolben (4) von der sich bei kleiner werdenden Temperaturen verkürzenden Stellbuchse (3) zurückgezogen wird. Dieser verringert die Größe das Durchfluss-Spaltes (24), bei höheren Temperaturen und vergrößert diesen bei kleiner werdenden Temperaturen. Es besteht eine Verbindung zwischen den beiden Überströmkanälen (52, 53). Von diesem ringförmigen Überströmkanal gehen axiale Bohrungen durch die Zylinderwand (58). Im unteren Bereich des Zylinders münden dieser Bohrungen in einem Hohlraum, welcher von dem Stellkolben (4) temperaturabhängig geöffnet wird, so dass bei offenem Stellkolben (4) temperaturabhängig eine Verbindung zum Überströmkanal (53) besteht. Somit ist bei mehr oder weniger weit geöffnetem Stellkolben oder Stellglied (4) ein Flüssigkeitsaustausch zwischen den beiden Überströmkanälen (52. 53) möglich.

Eine Temperaturkompensation kann auch separat oder zusätzlich durch Verwendung eines Kolbens (12) aus einem Material mit höherem Temperaturausdehnungskoeffizienten als das Material des Hauptzylinders erreicht werden. In diesem Fall bedarf es keines Durchflussspaltes (24), da hier die Regulierung über die dann temperaturabhängige Größe des Spaltes (204, 315. 315-1) zwischen Kolben (12, 308) und Zylinderinnenwand erfolgt.

Der Kolben (12, 308) kann auch mit einem entsprechenden Material beschichtet sein, wobei die Beschichtung auf den Bereich beschränkt sein kann, der an die Innenwand des Hauptzylinders grenzt, weil in diesem Bereich die Ausdehnung oder Schrumpfung des temperatursensitiven Beschichtungsmaterials den größten Einfluss auf den Spalt (204, 310, 315. 315-1) ausübt. Somit ist der Erfindung auch ein Pendeltilger, dessen hydraulische Dämpfer die besagte temperaturkompensierende Vorrichtung mit einem Kolben (12, 308) umfassen, welcher aus einem Material gefertigt oder mit einem Material (308-1) beschichtet ist, das einen größeren Temperaturausdehnungskoeffizienten besitzt als das weitere Material des Hauptzylinders (22, 313, 502).

In einer dritten Ausführungsform ist das mindestens eine Ausdehnungselement nicht im Vor (304)- und / oder Nachzylinder (311) sondern im Hauptzylinder (22, 313, 502) oder zwischen Hauptzylinder und äußerem Mantelrohr (314) positioniert. Das Ausdehnungselement (309, 501, 503) der temperatursensitiven Vorrichtung kann durch einen einfachen Formkörper, gefertigt aus oder beschichtet mit einem entsprechenden temperatursensitiven Material, beispielsweise in Form eines Zylinders (Vollschale, Halbschale oder Teile davon) oder einer Buchse, repräsentiert sein, so dass sich die kompliziertere Stellvorrichtung (3) (4) mit ggf. notwendigen Bypass-Öffnungen erübrigt. Je nach Größe des Dämpfers kann der das Ausdehnungselement (309, 501, 503) unterschiedlich lang und / oder dick sein, so dass dadurch verschieden ausgeprägte Materialverkürzungen oder -ausdehnungen bei Temperaturänderung eintreten können. Dadurch wird der Raum für die hydraulische Flüssigkeit kleiner oder größer und damit die Reibung größer oder kleiner entsprechend der sich verändernden Temperatur. Bei niedrigen Temperaturen schrumpft der Formzylinder deutlich stärker als Mantelrohr und Hauptzylinder so dass, für die nunmehr zäher gewordene Flüssigkeit mehr Platz zur Verfügung steht, so dass der Gesamt-Dämpfungseffekt praktisch konstant bleibt. Bei hohen Temperaturen steht weniger Raum für die strömende nunmehr wenig viskose Flüssigkeit zur Verfügung (die Spaltöffnungen 204, 315, 315-1 sind hier sehr klein), so dass auch hier der Gesamtdämpfungseffekt im optimalen Fall nahezu unverändert bleibt.
Das besagte mindesten eine Ausdehnungselement (309) ist in einer Ausführungsform im Zwischenraum (10) zwischen Hauptzylinder (22, 313, 502) und Mantelrohr (314) positioniert, oder aber auch im Inneren des Hauptzylinders. Damit die temperaturabhängige Längenausdehnung / -verkürzung des Ausdehnungselementes die Fließfähigkeit der bei verschiedenen Temperaturen unterschiedlich viskosen Flüssigkeit beeinflussen und regeln kann, wird ein entsprechend platzierter und geformter, in der Regel ringförmiger Spalt (310) im Zylinderboden und / oder Zylinderdeckel des Hauptzylinders (22, 313, 502) benötigt, der bei auftretender Längenänderung des Ausdehnungselementes, ganz oder teilweise geschlossen oder geöffnet wird, wodurch Einfluss auf die Dämpfung erfolgt. Die Temperaturkompensation erfolgt also durch das Ausdehnungselement (309), welches innen oder außen um den Zylinder herum, angeordnet ist. In Abhängigkeit von der Temperatur dehnt sich das Element (309) unterschiedlich aus, so dass der Temperaturkompensation-Spalt (310), mehr oder weniger stark geöffnet wird. Mit höherer Temperatur sinkt die Viskosität der hydraulischen Flüssigkeit. Gleichzeitig dehnt sich das Ausdehnungselement, (309) aus, so dass der Ringspalt (310), kleiner wird. Da der Durchmesser des Zylinderrohres (22, 313, 502) vorzugsweise ballig, also im mittleren Kolbenbereich größer als im Endbereich ist, wird die Dämpfung eines im Endbereich langsameren Pendeltilgers durch den erfindungsgemäßen Dämpfer erhöht. Gegenstand der Erfindung ist somit ein entsprechender hydraulischer Dämpfer, welcher an mindestens einem Ende einen Ringspalt (310) aufweist, der durch die temperaturbedingte Längenveränderung des Ausdehnungselementes (309, 501, 503) mehr oder weniger geschlossen oder geöffnet wird, so dass hierdurch die Dämpfung trotz Temperaturänderung im wesentlichen unverändert bleibt

In einer weiteren Ausführungsform, wird das mindestens eine Ausdehnungselement (501, 503) durch eine vollständige oder teilweise Innenbeschichtung oder eine an die Innenwand anliegende entsprechend dem Hauptzylinder geformte Innenhülse (ballig oder konischzylindrisch) im Inneren des Hauptzylinders repräsentiert. In einer bevorzugten Ausführungsform wird im Mittelbereich des Zylinders das Ausdehnungselement dicker gestaltet als in den Endbereichen des Hauptzylinders bzw. des Kolbenweges im Zylinder. Hierfür muss entsprechend das Zylinderrohr (502) geformt sein, ggf. unter Berücksichtigung der anderen oben beschriebenen Formmerkmale. Sobald die Temperatur z.B. sinkt, steigt die Viskosität der hydraulischen Flüssigkeit, in der Regel des Öls, und das Ausdehnungselement (501, 503) zieht sich zusammen. Dadurch wird der Ringspalt (204, 315, 315-1) zum Kolben größer. Der größere Ringspalt gleicht die höhere Viskosität der hydraulischen Flüssigkeit bei tieferen Temperaturen aus. Bei höheren Temperaturen sinkt die Viskosität und der Ringspalt wird kleiner. Die Innenfläche der Kunststoffbeschichtung ist vorzugsweise ballig um eine höhere Dämpfung in der Endlage zu erzeugen. In der Endlage ist der Ringspalt zum Kolben kleiner und darf sich bei einer Temperaturänderung nicht zu stark verändern. Das führt dazu, dass die Kunststoffbeschichtung in der Endlage dünner sein muss. Durch eine geeignete Form des Zylinderrohrs (502) und der Beschichtung (501, 503), kann jede Lage des Kolbens eine andere Dämpfung haben, welche gleichzeitig temperaturkompensiert ist.

Die Ausdehnungselemente (309, 501, 503) sind erfindungsgemäß aus synthetischen oder natürlichen elastischen Materialien unterschiedlicher Härte, die der Fachmann je nach zu erwartenden auftretenden Kräften im Dämpfer oder Tilger aus den bekannten Elastomerstoffen auszuwählen vermag.

In einer weiteren Ausführungsform weist der Kolben (12, 308) des Dämpfers an einem oder beiden Enden in axialer Richtung eine vorzugsweise ringförmige Nut (307) auf, die dafür vorgesehen ist, die Dämpfung kurz vor dem Anschlag zu erhöhen. Dazu weist der Hauptzylinder (22, 313, 502) im unteren und /oder oberen Bereich, bzw. an den Enden, vorzugsweise in den Zylinderdeckeln, eine entsprechend der Nut geformte Profilnase (306) auf. In diese Nut (307) taucht die Profilnase zur progressiven Anschlagdämpfung ein. Die in dem engen Spalt eingesperrte Flüssigkeit bewirkt eine weitere Vergrößerung der Dämpfung in der Endlage.

In einer erfindungsgemäßen Ausführungsform der Erfindung weist der Pendeltilger zwei Pendelmassen (402, 411) auf, welche durch ein Zentralrohr (404) miteinander verbunden sind, sowie Vorrichtungen zur Einstellung und Ausrichtung der hydraulischen Dämpfer (405, 406, 407) und der Endausschläge des Tilgers (408, 409, 410).

Bei den erfindungsgemäßen Pendeltilgern ist die Konusform des Hauptzylinders (22, 313, 502) so ausgelegt, dass die Dämpfung des Pendeltilgers im größten Ausschlagpunkt etwa der Dämpfung im Bereich des Nullpunktdurchgangs entspricht, oder größer ist als im Bereich des Nullpunktdurchgangs

Zur Dämpfung der ersten Turmeigenfrequenz wird der erfindungsgemäße Pendeltilger mit den Seilen oder elastischen Stangen im oberen Bereich des Turmes befestigt. Zur Dämpfung der zweiten Turmeigenfrequenz wird der Tilger im Bereich der größten Amplitude im Turm (etwa Turmmitte) angeordnet. Bei höheren Frequenzen (ca. größer 0,5 Hz) können zu den Seilen Zusatzfedern angebracht werden, damit die Eigenfrequenz des Tilgersystems trotz langer Seile entsprechend hoch ist. Statt der Seile ist auch der Einsatz von Pendelstangen möglich, welche ein in allen Richtungen bewegliches Gelenk besitzen. Da ein System, bestehend aus nicht-gedämpften Seilen mit zusätzlicher Masse, nahezu ungedämpft ist, können zusätzliche Dämpfer erforderlich sein.

Zusätzliche Federn werden auch bei Frequenzen kleiner 0,5Hz zur Feinjustierung verwendet. Diese können in Wirkrichtung des Tilgers eingebaut werden. Es ist auch möglich, die Zusatzfedern senkrecht zur Tilger Wirkrichtung einzusetzen. Durch des gleichzeitige Anbinden der Feder mit einem langen Befestigungselement (Seil oder Stab) erfolgt eine verhältnismäßig geringe Verformung der Zusatzfeder. Es sind auch zusätzliche Federn in Winkeln zwischen Wirkrichtung und Senkrecht zur Wirkrichtung möglich.

Der untere feste Teil des Dämpfers ist an der Pendelmasse (411) befestigt. Die Befestigung kann im oberen Bereich der Pendelmasse erfolgen. Bei der Verwendung einer sehr langen Masse, mit tieferem Schwerpunkt müssen die Dämpfer etwa in der Höhe des Schwerpunktes angeordnet werden. Der obere Teil der Dämpfer wird am Turm oder an eine mit dem Turm befestigten Konstruktion befestigt. Die Dämpfer sind vorzugsweise schräg angeordnet, wobei der Winkel zur Senkrechten vorzugsweise zwischen 30° und 60°, vorzugsweise 45° oder ca. 45° beträgt. Der Winkel kann aus jedoch aus Platzgründen auch kleiner 30 ° sein, beispielsweise bei engen Platzverhältnissen zwischen 20° und 30 °, ohne dass eine signifikante Beeinträchtigung der Dämpfung eintritt.

Die erfindungsgemäßen Pendeltilger weisen vorzugsweise drei der beschriebenen Dämpfer auf, die vorzugsweise sternförmig angeordnet sind. Grundsätzlich ist auch der Einsatz von zwei Dämpfen, die im Winkel von 90° angeordnet sind, möglich.

Die Erfindung umfasst anstelle von Pendelstangen oder Pendelseilen auch elastische Federstangen, bzw. spiralförmig gewundene Stangen, welche in sich biegsam sind. Statt der Stahlseile werden dazu fest eingespannte Biegestäbe verwendet, die aufgrund ihrer eigenen Steifigkeit eine höhere Frequenz bewirken, als das mit elastischen Seilen der Fall ist. Diese bestehen im Wesentlichen aus einem spiralförmig geschlitzten Rohr, welches eine große radiale Verformung bei verhältnismäßig kleinen Biegespannungen ermöglicht. Zur Optimierung der Federn ist es möglich, die Steigung der Spiralen im mittleren, bei der Biegung nur wenig verformten Bereich, flacher zu gestalten, so dass auch in diesem Bereich eine stärkere Verformung stattfindet, so dass die Länge der Federn noch weiter reduziert werden kann. Da mit solchen Stäben aufgrund der elastischen Verformungsgrenzen nur relativ kleine Wege in horizontaler Richtung realisierbar sind, müssen die Stäbe in größerer Länge (>2m) ausgeführt werden. Um trotzdem eine ausreichende Steifigkeit zu erreichen muss der Querschnitt der Stäbe mit zunehmender Länge vergrößert werden. Aufgrund der dadurch wiederum höheren Spannungen im Randbereich der dickeren Stäbe muss die Länge weiter vergrößert werden. Das System ist unter Verwendung der damit dicken und langen Stangen realisierbar und stellt eine Neuerung dar.

Die erfindungsgemäßen Pendeltilger sind vorzugsweise für den Einsatz in Windkraftanlagen, insbesondere im Bereich des Turmes vorgesehen. Sie können jedoch generell bei der Dämpfung von schwingungsfähigen Bauwerken eingesetzt werden, wegen der Möglichkeit der Temperaturkompensation insbesondere im Freien. Beispiele hierfür sind:
- Kran stationär oder Mobilkran
- Türme, Funktürme, Leuchttürme, Aussichtstürme
- Gebäude, Hochhäuser, Stadien
- Brücken, Zugbrücke, Brückenseile

Gegenstand der Erfindung sind letztlich auch Windkraftanlagen, welche üblicherweise einen Turm mit Gondel, Rotor, Generator und ggf. Getriebe besitzen. Die erfindungsgemäßen Windkraftanlagen weisen mindestens einen Pendeltilger oder mindestens einen hydraulischen Dämpfer wie oben oder in den Ansprüchen beschrieben, auf, wobei vorzugsweise der hydraulische Dämpfer oder der hydraulische Pendeltilger im Turm der Anlage so positioniert ist, dass Turmschwingungen der 1. und 2. Eigenfrequenz gedämpft werden.

Die beschriebene Erfindung bezieht sich auf Pendeltilger, welche aufgrund ihrer konstruktiven Merkmale, entlang des Kolbenweges einstellbaren Dämpfungseigenschaften besitzen. Zudem sind diese Dämpfer und Pendeltilger mit Vorrichtungen versehen, welche die durch Temperaturänderungen auftretenden sich verändernden Dämpfungseigenschaften des Dämpfers und Pendeltilgers ganz oder zumindest weitgehend kompensieren.

Das hier vorgestellte Prinzip der temperaturkompensierten Dämpfung kann jedoch auch unabhängig von den konstruktiven Maßnahmen des beschriebenen Pendeltilgers zur Einstellbarkeit der Dämpfungseigenschaften eines jedweden hydraulischen Dämpfers entlang seines Kolbenweges eingesetzt werden.

### Kurze Beschreibung der Bezugsgrößen:

- 3: Stellbuchse oder Stellbolzen
- 4: Stellkolben oder Stellglied
- 10: Raum / Volumen zwischen Mantelrohr 314 und Hauptzylinder 22, 213, 502
- 12: Zylinderkolben (im Hauptzylinder 22)
- 22: Hauptzylinder / Zylinderinnenrohr
- 23: Rückholfeder für Stellglied oder Stellkolben 4
- 24: Durchflussspalt (By-Pass) im Bereich des Stellgliedes/Stellkolbens 4
- 27: Bewegungsrichtung Kolben
- 28: Bewegungsrichtung Flüssigkeit
- 52: Überströmkanal (in Richtung Nachzylinder)
- 53: Überströmkanal (in Richtung Vorzylinder)
- 58: axiale Überströmbohrung (Hauptzylinder)
- 201: Konuswinkel Hauptzylinder Endbereich innen
- 202: Konuswinkel Hauptzylinder Endbereich außen
- 203: Konuswinkel Kolben
- 204: Spalt zwischen 202 und 203
- 301: Anbindungsgelenk
- 302: Kolbenstange(n), Kolbenrohr
- 303: Dichtung
- 304: Vorzylinder / Flüssigkeitsraum / Ausgleichsvolumen
- 305: Gleitelement für Kolbenstange
- 307: Nut im Kolben 308
- 308: Zylinderkolben (im Hauptzylinder 22)
- 308-1: Ausdehnungselement auf Kolben 308
- 309: Ausdehnungselement als Beschichtung oder Formkörper
- 310: Temperaturkompensationsspalt im Zylinderdeckel oder Zylinderboden
- 311: Nachzylinder / Flüssigkeitsraum
- 312: Überströmrohr im Raum zw. Mantelrohr 314 und Hauptzylinder 22, 313, 502
- 313: Hauptzylinder / Zylinderinnenrohr: ballig / konusförmig-zylindrisch
- 314: Mantelrohr / Zylinderaußenrohr (Hauptzylinder)
- 315: temperatur-und lageabhängiger Spalt im breiten Bereich-Mittellage
- 315-1: temperatur-und lageabhängiger Spalt im engen Bereich-Endlage
- 401: Pendelstangen, Pendelseile, Pendelfedern
- 402: obere Tilgermasse
- 403: kompletter erfindungsgemäßer Dämpfer
- 404: Zentralrohr Tilgermasse
- 405, 406: Dämpfer-Gelenke turmseitig-tilgerseitig
- 407: Klemmring Höheneinstellung
- 408, 409: Endanschläge, tilgerseitig-turmseitig
- 410: Durchfallschutz
- 411: untere Tilgermasse
- 412: Anschlagring
- 413: Elastmer-Federelemente
- 501, 503: Ausdehnungselement als Elstomerschicht /Kunststoffschicht
- 502: Hauptzylinder / Zylinderinnenrohr: unterschiedlicher Querschnitt

### Kurze Beschreibung der Abbildungen

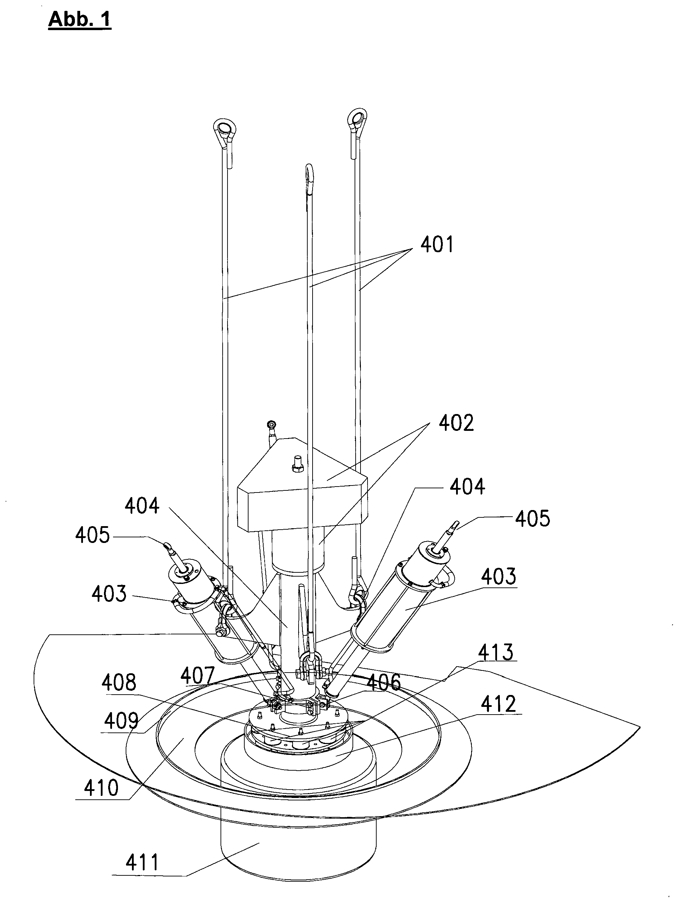

- Abb. 1: Pendeltilger mit erfindungsgemäßen Hydrodämpfern

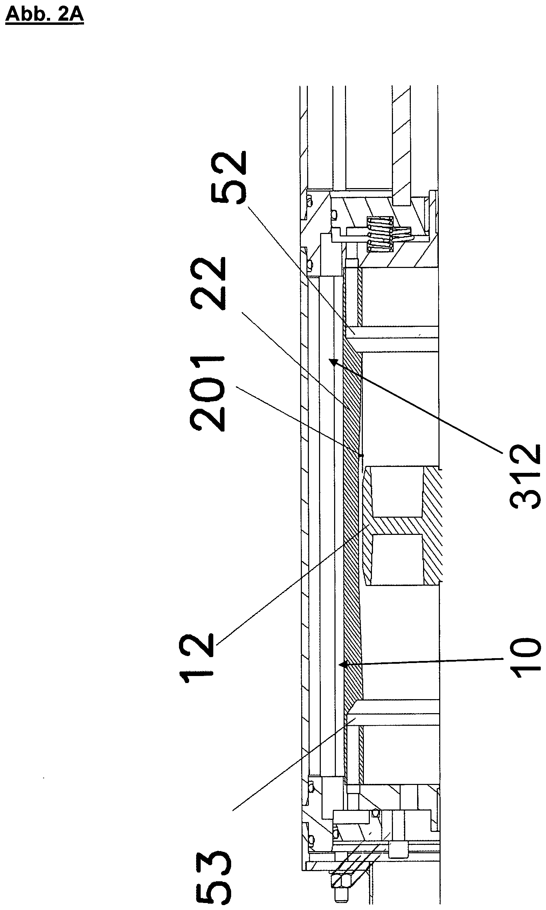

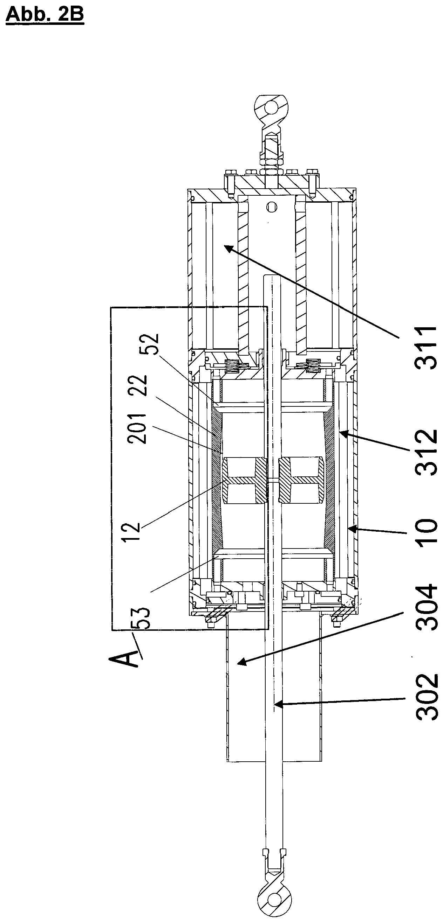

- Abb. 2A/2B: Schnitte durch erfindungsgemäßen Hauptzylinder (hälftig und gesamt)

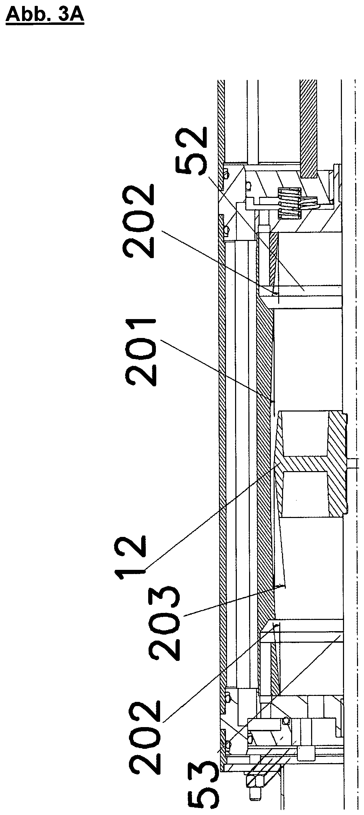

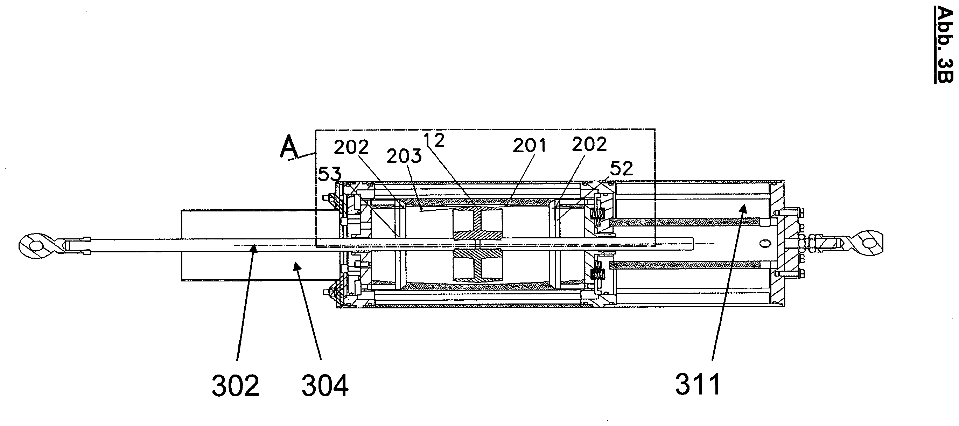

- Abb. 3A/3B: Details Hauptzylinder (hälftig und gesamt)

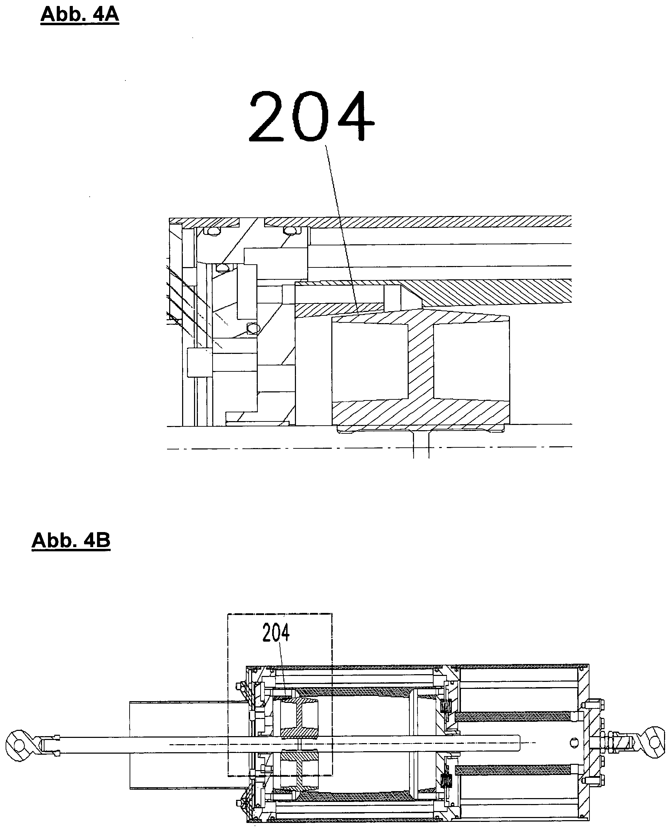

- Abb. 4A/4B: kegeliger (konusförmiger) Kolben in progressiven Bereich verschoben

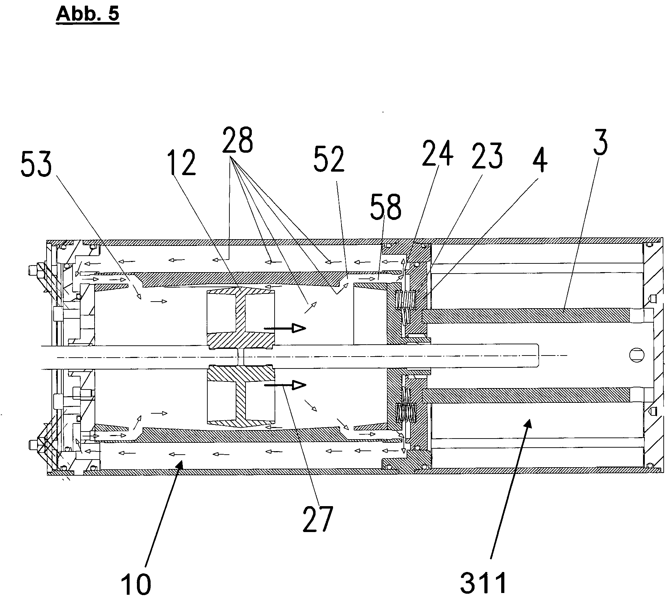

- Abb. 5: Temperaturregelung durch Stellbuchse und Stellkolben

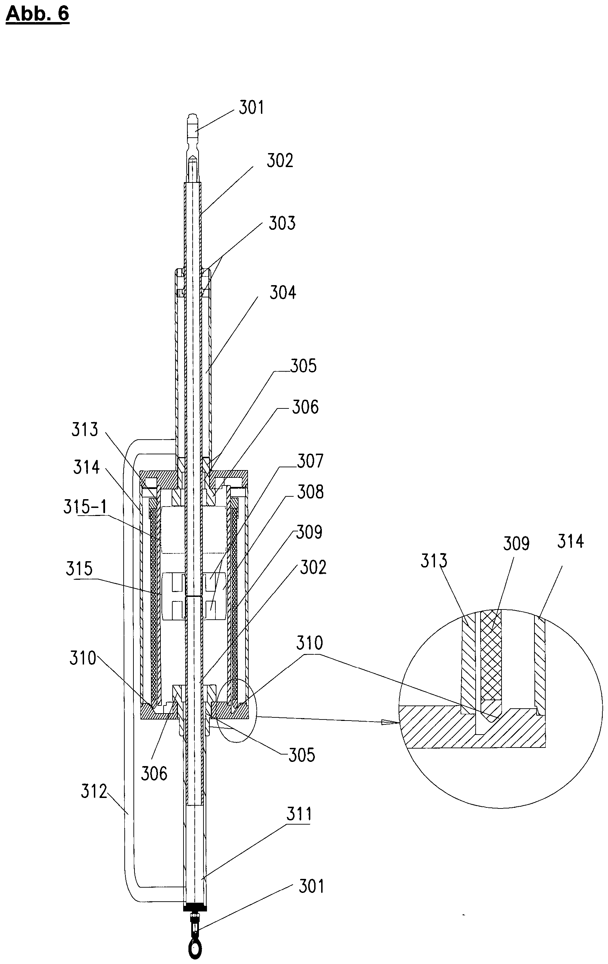

- Abb. 6: Hydrodämpfer mit Temperaturkompensierung mittels Ausdehnungselement 309 und Spalt 310

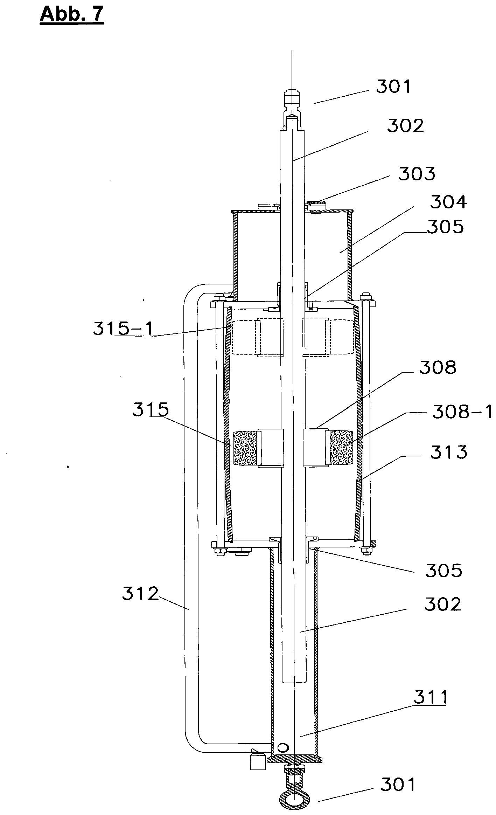

- Abb. 7: Hydrodämpfer mit Temperaturkompensierung mittels beschichteten Kolben 308 in einem balligen Zylinderrohr

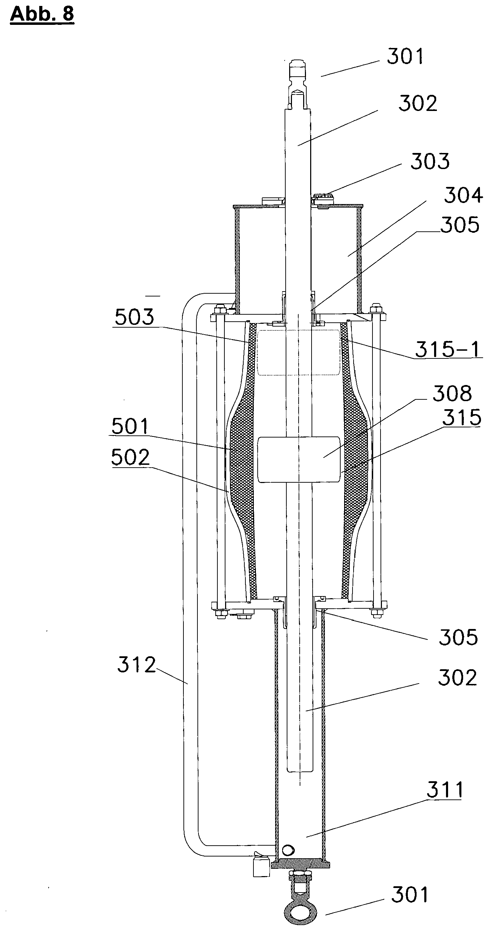

- Abb. 8: Hydrodämpfer mit Temperaturkompensierung mittels unterschiedlich dicker Beschichtung (501, 503) innerhalb des Zylinderohrs (502) mit größerem Querschnitt im Mittelbereich

## Patentansprüche

1. Pendeltilger zur Dämpfung von Turmschwingungen in einer Windkraftanlage, wobei die Dämpfung an die Geschwindigkeit des Pendels angepasst werden kann, umfassend mindestens eine Pendelmasse (402, 411), welche an Pendelseilen oder Pendelstangen (401) befestigt ist, sowie mindestens zwei hydraulische Dämpfer mit entlang des Kolbenweges einstellbaren Dämpfungseigenschaften, welche mit einem Ende an der Pendelmasse und mit dem anderen Ende am zu dämpfenden Bauwerk befestigt sind, wobei die hydraulischen Dämpfer jeweils umfassen:
(i) einen Hauptzylinder (22, 313, 502) in dessen Inneren entlang seiner Längsachse ein durch hydraulische Flüssigkeit bewegbarer Kolben (12, 308) sich mittels mindestens einer Kolbenstange (302) hin und her verschieben lässt entsprechend den auf den Dämpfer in Längsrichtung von außen einwirkenden Kräften; und der Hauptzylinder zumindest in beiden Endbereichen so konusförmig gestaltet ist, dass das engere Konusende nach außen und das weitere Konusende nach innen gerichtet ist, wodurch der Durchmesser des Zylinders in der Mitte größer ist als in den beiden Endbereichen,
und der Kolben (12, 308) ebenfalls eine entsprechend konusförmige Gestalt aufweist, die ein Verschieben des Kolbens in den jeweiligen konusförmigen Endbereich des Zylinders bis zum Endanschlag ermöglicht,
und der Spalt (204, 315) zwischen Kolben und Hauptzylinder im mittleren Bereich des Hauptzylinders größer ist als in den konusförmigen Endbereichen,
(ii) einen Vor- und Nachzylinderbereich (304, 311) und
(iii) Überströmvorrichtungen- und/oder Rückstromvorrichtungen, welche die durch den bewegten Kolben (12, 308) verdrängte hydraulische Flüssigkeit hinter den Kolben zurückführen,
wobei die Dämpfung der hydraulischen Dämpfer, welche durch Reibung der zwischen Kolben und Hauptzylinder vorbeiströmenden hydraulischen Flüssigkeit erzeugt wird, abhängig ist von dem besagten Spalt (204, 315) zwischen Hauptzylinder und Kolben einerseits und der Geschwindigkeit des Kolbens andrerseits, und dabei die Geschwindigkeit des Pendels am Nullpunktdurchgang am größten ist, mit größere werdenden Amplituden kleiner und am größten Ausschlagpunkt des Pendels Null wird,
**dadurch gekennzeichnet, dass** die Konusform des Hauptzylinders (22, 313, 502) in den beiden Endbereichen so ausgelegt ist, dass die Dämpfung des Pendeltilgers (a) im besagten größten Ausschlagpunkt des Pendels etwa der Dämpfung im Bereich des besagten Nullpunktdurchgangs entspricht oder größer ist als im Bereich des Nullpunktdurchgangs, oder (b) über den gesamten Auslenkungsbereich des Pendels konstant oder annähernd konstant ist.

2. Pendeltilger nach Anspruch 1, **dadurch gekennzeichnet, dass** die konusförmigen Endbereiche des Hauptzylinders (22, 313, 502) einen unterschiedlichen Konuswinkel (201, 202) aufweisen, wobei der Konuswinkel des nach außen weisenden Endabschnitts (202) des Zylinders größer ist als der des nach innen weisenden Endabschnitts (201).

3. Pendeltilger nach Anspruch 1 oder 2, **dadurch gekennzeichnet, dass** der Konuswinkel (203) des Kolbens (12) gleich oder größer dem größten Konuswinkel (201, 202) der konusförmigen Endbereiche des Hauptzylinders (22, 313, 502) ist, wobei der Konuswinkel gemessen wird zwischen der Längsachse eines Dämpfers und der jeweiligen Konusfläche.

4. Pendeltilger nach einem der Ansprüche 1 - 3, **dadurch gekennzeichnet, dass** die hydraulischen Dämpfer eine Vorrichtung umfassen zur Kompensation der durch Temperatur bedingten Veränderung der Viskosität der hydraulischen Flüssigkeit und damit der Dämpfung.

5. Pendeltilger nach Anspruch 4, **dadurch gekennzeichnet, dass** besagte temperaturkompensierende Vorrichtung mindestens ein Ausdehnungselement (309, 3, 4, 308-1, 501, 503) aufweist, welche aus einem Material gefertigt oder beschichtet ist, welches einen größeren Temperaturausdehnungskoeffizienten aufweist als das Material derjenigen restlichen Teile des Dämpfers, die von der unter Druck befindlichen Flüssigkeit im Hauptzylinder (22, 313, 502) umgeben sind oder mit dieser in Kontakt stehen.

6. Pendeltilger nach Anspruch 5, **dadurch gekennzeichnet, dass** das mindestens eine Ausdehnungselement der Kolben (12, 308) selbst, der aus einem entsprechenden Material gefertigt ist, oder eine Beschichtung (308-1) des Kolbens ist.

7. Pendeltilger nach Anspruch 5 oder 6, **dadurch gekennzeichnet, dass** das besagte mindestens eine Ausdehnungselement (309, 501, 503) im Hauptzylinder (22, 313, 502) oder im Raum (10) zwischen Hauptzylinder (22, 313, 502) und Mantelrohr (314) untergebracht ist.

8. Pendellager nach Anspruch 7, **dadurch gekennzeichnet, dass** der Hauptzylinder mindestens an einem Ende einen Ringspalt (310) aufweist, welcher durch die temperaturbedingte Längenveränderung des Ausdehnungselementes (309) mehr oder weniger geschlossen oder geöffnet wird, so dass hierdurch die Dämpfung trotz Temperaturänderung im Wesentlichen unverändert bleibt.

9. Pendellager nach Anspruch 7, **dadurch gekennzeichnet, dass** das Ausdehnungselement (501, 503) sich im Inneren des Hauptzylinders (22, 313, 502) befindet, und als Beschichtung ganz oder teilweise die Innenwand des Hauptzylinders (22, 313, 502) auskleidet oder an dieser anliegt.

10. Pendeltilger nach Anspruch 5 oder 6, **dadurch gekennzeichnet, dass** besagtes mindestens eine temperatursensitive Ausdehnungselement eine Stellmechanik (3, 4) am oberen und/oder unteren Ende des Hauptzylinders (22, 313, 502) umfasst, wobei besagte Stellmechanik in Abhängigkeit von ihrer temperaturabhängigen Längenveränderung die Breite eines Durchflussspaltes (24) reguliert, der in Verbindung mit dem Hauptzylinder und den Überströmeinrichtungen (52, 53, 58) steht, und damit bei bewegten Kolben (12, 308) den Flüssigkeitsfluss im Hauptzylinder (22, 313, 502).

11. Pendeltilger nach Anspruch 10, **dadurch gekennzeichnet, dass** die Stellmechanik einen Stellbolzen oder eine Stellbuchse (3), und ein Stellglied oder Stellkolben (4) umfasst, wobei der Stellkolben oder das Stellglied (4)
(i) lose mit der / dem Stellbuchse / Stellbolzen (3) verbunden ist und durch eine Rückholeinrichtung (23) wieder in die Ausgangsposition gebracht werden kann, oder
(ii) fest mit der Stellbuchse oder dem Stellbolzen (3) verbunden ist, und die Rückholung durch Längenkontraktion der Stellbuchse (3) bei Temperaturänderung erfolgt.

12. Pendeltilger nach einem der Ansprüche 1 - 11, **dadurch gekennzeichnet, dass** der Kolben (12, 308) eine Verdrängungsnut (307) an einem oder beiden Enden in axialer Richtung aufweist, welche eine entsprechend platzierte und geformte Profilnase (306) an einem oder beiden Enden des Hauptzylinders (22, 313, 502) bei Endanschlag aufzunehmen vermag.

13. Pendeltilger nach einem der Ansprüche 1 - 12, **dadurch gekennzeichnet, dass** er zwei Pendelmassen (402, 411) aufweist, welche durch ein Zentralrohr (404) miteinander verbunden sind, sowie Vorrichtungen zur Einstellung und Ausrichtung der hydraulischen Dämpfer (405, 406, 407) und der Endausschläge des Tilgers (408, 409, 410).

14. Windkraftanlage umfassend eine Turm mit Gondel, Rotor, Generator und ggf. Getriebe, **dadurch gekennzeichnet, dass** sie mindestens einen Pendeltilger nach einem der Ansprüche 1 - 13 aufweist.

15. Verwendung eines Pendeltilgers nach einem der Ansprüche 1 - 13 zur Dämpfung von Turmschwingungen der 1. und 2. Eigenfrequenz in Windkraftanlagen.

## Claims

1. Pendulum vibration absorber for damping tower vibrations in a wind turbine, where the damping can be adapted to the speed of the pendulum, comprising at least one pendulum mass (402, 411) which is attached to pendulum cables or pendulum rods (401), and at least two hydraulic dampers having damping properties that can be adjusted along the piston travel, which are attached at one end to the pendulum mass and at the other end to the construction to be damped, where the hydraulic dampers each comprise (i) a main cylinder (22, 313, 502), in the interior of which a piston (12, 308), which can be moved by hydraulic fluid, can be moved to and fro along its longitudinal axis by means of at least one piston rod (302) in accordance with the forces acting externally on the damper in the longitudinal direction;
and the main cylinder has a conical design, at least in the two end regions, so that the narrower cone end faces outward and the wider cone end faces inward, causing the diameter of the cylinder to be greater in the centre than in the two end regions,
and the piston (12, 308) likewise has a correspondingly conical design, which enables the piston to be moved into the respective conical end region of the cylinder as far as the end stop,
and the gap (204, 315) between piston and main cylinder is greater in the central region of the main cylinder than in the conical end regions,
(ii) a pre- and post-cylinder region (304, 311) and
(iii) overflow devices and/or back-flow devices, which return the hydraulic fluid displaced by the moved piston (12, 308) behind the piston,
where the damping of the hydraulic dampers, which is generated by friction of the hydraulic fluid flowing past between piston and main cylinder, is dependent on the said gap (204, 315) between main cylinder and piston the one hand and the speed of the piston on the other hand, and
the speed of the pendulum is greatest when passing through the zero point, decreases with increasing amplitude and becomes zero at the greatest excursion point of the pendulum,
**characterised in that** the cone shape of the main cylinder (22, 313, 502) in the two end regions is designed so that the damping of the pendulum vibration absorber (a) at the said greatest excursion point of the pendulum corresponds approximately to the damping in the region of the said passage through the zero point or is greater than in the region of the passage through the zero point, or (b) is constant or approximately constant over the entire excursion range of the pendulum.

2. Pendulum vibration absorber according to Claim 1, **characterized in that** the conical end regions of the main cylinder (22, 313, 502) have a different cone angle (201, 202), where the cone angle of the outward-facing end section (202) of the cylinder is greater than that of the inward-facing end section (201).

3. Pendulum vibration absorber according to Claim 1 or 2, **characterized in that** the cone angle (203) of the piston (12) is equal to or greater than the greatest cone angle (201, 202) of the conical end regions of the main cylinder (22, 313, 502), where the cone angle is measured between the longitudinal axis of a damper and the respective cone surface.

4. Pendulum vibration absorber according to one of Claims 1 - 3, **characterized in that** the hydraulic dampers comprise a device for compensation of the temperature-induced change in the viscosity of the hydraulic fluid and thus of the damping.

5. Pendulum vibration absorber according to Claim 4, **characterized in that** said temperature-compensating device has at least one expansion element (309, 3, 4, 308-1, 501, 503), which is made from or coated with a material which has a greater coefficient of thermal expansion than the material of the remaining parts of the damper that are surrounded by the pressurized fluid in the main cylinder (22, 313, 502) or are in contact therewith.

6. Pendulum vibration absorber according to Claim 5, **characterized in that** the at least one expansion element of the pistons (12, 308) itself, which is made from a corresponding material, or is a coating (308-1) of the piston.

7. Pendulum vibration absorber according to Claim 5 or 6, **characterized in that** said at least one expansion element (309, 501, 503) is accommodated in the main cylinder (22, 313, 502) or in the space (10) between main cylinder (22, 313, 502) and jacket tube (314).

8. Pendulum vibration absorber according to Claim 7, **characterized in that** the main cylinder has, at least at one end, a ring gap (310), which is closed or opened to a greater or lesser extent by the temperature-induced change in length of the expansion element (309), so that the damping thus remains essentially unchanged in spite of the change in temperature.

9. Pendulum vibration absorber according to Claim 7, **characterized in that** the expansion element (501, 503) is located in the interior of the main cylinder (22, 313, 502), and lines all or some of the inside wall of the main cylinder (22, 313, 502) as coating or is in contact therewith.

10. Pendulum vibration absorber according to Claim 5 or 6, **characterized in that** said at least one temperature-sensitive expansion element comprises an adjustment mechanism (3, 4) at the upper and/or lower end of the main cylinder (22, 313, 502), where said adjustment mechanism regulates the width of a through-flow gap (24), which is connected to the main cylinder and the overflow devices (52, 53, 58), as a function of its temperature-dependent change in length, and thus the flow of fluid in the main cylinder (22, 313, 502) when the piston (12, 308) is moved.

11. Pendulum vibration absorber according to Claim 10, **characterized in that** the adjustment mechanism comprises an adjustment bolt or adjustment bushing (3), and an adjustment element or adjustment piston (4), where the adjustment piston or adjustment element (4)
(i) is loosely connected to the adjustment bushing / adjustment bolt (3) and can be returned to the starting position again by a return device (23), or
(ii) is firmly connected to the adjustment bushing or the adjustment bolt (3), and the return takes place by length contraction of the adjustment bushing (3) on a change in temperature.

12. Pendulum vibration absorber according to one of Claims 1 -11, **characterized in that** the piston (12, 308) has a displacement groove (307) at one or both ends in the axial direction, which is capable of accommodating a correspondingly positioned and shaped profile projection (306) at one or both ends of the main cylinder (22, 313, 502) at the end stop.

13. Pendulum vibration absorber according to one of Claims 1 - 12, **characterized in that** it has two pendulum masses (402, 411), which are connected to one another by a central tube (404), and devices for the adjustment and alignment of the hydraulic dampers (405, 406, 407) and the end excursions of the vibration absorber (408, 409, 410).

14. Wind turbine comprising a tower with nacelle, rotor, generator and optionally gearbox, **characterized in that** it has at least one pendulum vibration absorber according to one of Claims 1 - 13.

15. Use of a pendulum vibration absorber according to one of Claims 1 - 13 for damping tower vibrations of the 1st and 2nd resonant frequency in wind turbines.

## Revendications

1. Absorbeur de vibrations à pendule pour amortir des vibrations de pylône dans une éolienne, dans lequel l'amortissement peut être adapté à la vitesse du pendule, comprenant au moins une masse de pendule (402, 411) qui est liée à des câbles de pendule ou à des tiges de pendule (401), et au moins deux amortisseurs hydrauliques qui présentent des propriétés d'amortissement qui peuvent être ajustées en fonction de la course d'un piston, lesquels amortisseurs sont liés au niveau d'une extrémité à la masse de pendule et au niveau de l'autre extrémité à la construction qui doit être amortie, dans lequel les amortisseurs hydrauliques comprennent chacun :
(i) un cylindre principal (22, 313, 502), à l'intérieur duquel un piston (12, 308), qui peut être déplacé par un fluide hydraulique, peut être déplacé en va-et-vient suivant son axe longitudinal au moyen d'au moins une tige de piston (302) conformément aux forces qui opèrent de façon externe sur l'amortisseur dans la direction longitudinale ;
et le cylindre principal présente une conception conique, au moins au niveau des deux régions d'extrémité, de telle sorte que l'extrémité de cône plus étroite soit dirigée vers l'extérieur et que l'extrémité de cône plus large soit dirigée vers l'intérieur, ce qui a pour effet que le diamètre du cylindre est plus important au niveau du centre qu'il ne l'est au niveau des deux régions d'extrémité,
et le piston (12, 308) présente pareillement une conception conique en correspondance, ce qui permet que le piston soit déplacé à l'intérieur de la région d'extrémité conique respective du cylindre aussi loin que la butée de fin de course,
et l'espace (204, 315) entre le piston et le cylindre principal est plus important au niveau de la région centrale du cylindre principal qu'au niveau des régions d'extrémité coniques,
(ii) une région de pré-cylindre et de post-cylindre (304, 311) et
(iii) des dispositifs de trop-plein et/ou des dispositifs de refoulement, lesquels dispositifs ramènent le fluide hydraulique qui a été déplacé par le piston qui se déplace (12, 308) derrière le piston,
dans lequel l'amortissement des amortisseurs hydrauliques, qui est généré par la friction du fluide hydraulique qui s'écoule entre le piston et le cylindre principal, dépend dudit espace (204, 315) entre le cylindre principal et le piston d'une part et de la vitesse du piston d'autre part, et
la vitesse du pendule est la plus importante lorsqu'il passe par le point zéro, elle diminue lorsque l'amplitude augmente et elle devient égale à zéro au niveau du point d'excursion la plus importante du pendule,
**caractérisé en ce que** la forme de cône du cylindre principal (22, 313, 502) au niveau des deux régions d'extrémité est conçue de telle sorte que l'amortissement de l'absorbeur de vibrations à pendule (a) au niveau dudit point d'excursion la plus importante du pendule corresponde approximativement à l'amortissement au niveau de la région dudit passage par le point zéro ou soit plus important qu'au niveau de la région du passage par le point zéro, ou (b) soit constant ou approximativement constant sur la totalité de la plage d'excursion du pendule.

2. Absorbeur de vibrations à pendule selon la revendication 1, **caractérisé en ce que** les régions d'extrémité coniques du cylindre principal (22, 313, 502) présentent des angles de cône différents (201, 202), dans lequel l'angle de cône de la section d'extrémité dirigée vers l'extérieur (202) du cylindre est plus important que celui de la section d'extrémité dirigée vers l'intérieur (201).

3. Absorbeur de vibrations à pendule selon la revendication 1 ou 2, **caractérisé en ce que** l'angle de cône (203) du piston (12) est égal ou supérieur à l'angle de cône le plus grand (201, 202) des régions d'extrémité coniques du cylindre principal (22, 313, 502), dans lequel l'angle de cône est mesuré entre l'axe longitudinal d'un amortisseur et la surface de cône respective.

4. Absorbeur de vibrations à pendule selon l'une des revendications 1 - 3, **caractérisé en ce que** les amortisseurs hydrauliques comprennent un dispositif pour la compensation de la variation de la viscosité du fluide hydraulique induite par la température et par conséquent, pour la compensation de l'amortissement.

5. Absorbeur de vibrations à pendule selon la revendication 4, **caractérisé en ce que** ledit dispositif de compensation en fonction de la température comporte au moins un élément de dilatation (309, 3, 4, 308-1, 501, 503), lequel est réalisé à partir ou est revêtu d'un matériau qui présente un coefficient de dilatation thermique plus important que celui du matériau des parties restantes de l'amortisseur qui sont entourées par le fluide sous pression à l'intérieur du cylindre principal (22, 313, 502) ou qui sont en contact avec celui-ci.

6. Absorbeur de vibrations à pendule selon la revendication 5, **caractérisé en ce que** l'au moins un élément de dilatation des pistons (12, 308) lui-même est réalisé à partir d'un matériau correspondant ou est un revêtement (308-1) du piston.

7. Absorbeur de vibrations à pendule selon la revendication 5 ou 6, **caractérisé en ce que** ledit au moins un élément de dilatation (309, 501, 503) est logé à l'intérieur du cylindre principal (22, 313, 502) ou à l'intérieur de l'espace (10) entre le cylindre principal (22, 313, 502) et un tube formant enveloppe (314).

8. Absorbeur de vibrations à pendule selon la revendication 7, **caractérisé en ce que** le cylindre principal comporte, au moins au niveau d'une extrémité, un espace annulaire (310), lequel est fermé ou ouvert selon un degré plus ou moins important par la variation induite par la température de la longueur de l'élément de dilatation (309), de telle sorte que l'amortissement reste par voie de conséquence essentiellement inchangé en dépit de la variation de la température.

9. Absorbeur de vibrations à pendule selon la revendication 7, **caractérisé en ce que** l'élément de dilatation (501, 503) est localisé dans l'intérieur du cylindre principal (22, 313, 502), et il chemise la totalité ou une certaine part de la paroi interne du cylindre principal (22, 313, 502) en tant que revêtement ou il est en contact avec.

10. Absorbeur de vibrations à pendule selon la revendication 5 ou 6, **caractérisé en ce que** ledit au moins un élément de dilatation sensible à la température comprend un mécanisme de réglage (3, 4) au niveau de l'extrémité supérieure et/ou de l'extrémité inférieure du cylindre principal (22, 313, 502), dans lequel ledit mécanisme de réglage régule la largeur d'un espace de passage d'écoulement (24), lequel est connecté au cylindre principal et aux dispositifs de trop-plein (52, 53, 58), en fonction de la variation de sa longueur qui dépend de la température, et par voie de conséquence, il régule l'écoulement du fluide dans le cylindre principal (22, 313, 502) lorsque le piston (12, 308) est déplacé.

11. Absorbeur de vibrations à pendule selon la revendication 10, **caractérisé en ce que** le mécanisme de réglage comprend un boulon de réglage ou une douille de réglage (3), et un élément de réglage ou un piston de réglage (4), dans lequel le piston de réglage ou l'élément de réglage (4)
(i) est connecté avec un certain jeu à la douille de réglage/au boulon de réglage (3) et il peut être ramené à la position de départ à nouveau au moyen d'un dispositif de retour (23), ou
(ii) est connecté fermement à la douille de réglage ou au boulon de réglage (3), et le retour à la position de départ est réalisé au moyen de la contraction en longueur de la douille de réglage (3) suite à une variation de la température.

12. Absorbeur de vibrations à pendule selon l'une des revendications 1 - 11, **caractérisé en ce que** le piston (12, 308) comporte une gorge de déplacement (307) au niveau d'une seule extrémité ou des deux extrémités dans la direction axiale, laquelle gorge permet de recevoir une protubérance profilée conformée et positionnée en correspondance (306) au niveau d'une seule extrémité ou des deux extrémités du cylindre principal (22, 313, 502) au niveau de la butée de fin de course.

13. Absorbeur de vibrations à pendule selon l'une des revendications 1 - 12, **caractérisé en ce qu'**il comporte deux masses de pendule (402, 411), lesquelles sont connectées l'une à l'autre au moyen d'un tube central (404), et des dispositifs pour le réglage et l'alignement des amortisseurs hydrauliques (405, 406, 407) et des excursions de fin de course de l'absorbeur de vibrations (408, 409, 410).

14. Éolienne comprenant un pylône avec une nacelle, un rotor, un générateur et en option, une boîte de vitesses, **caractérisée en ce qu'**elle comporte au moins un absorbeur de vibrations à pendule selon l'une des revendications 1 - 13.

15. Utilisation d'un absorbeur de vibrations à pendule selon l'une des revendications 1 - 13 pour amortir les vibrations de pylône des 1ère et 2nde fréquences de résonance dans les éoliennes.
